# EUROPEAN PATENT SPECIFICATION

(11) **EP 3 903 964 B1**
(45) Date of publication and mention of the grant of the patent: **31.05.2023**
(21) Application number: 18942401.3
(22) Date of filing: 07.12.2018
(51) Int. Cl.: B22F 1/05, B22F 9/08, B33Y 70/00, C22C 1/04, C22C 21/06, C22F 1/047, B22F 10/28, B22F 10/64, B33Y 10/00, B33Y 40/20

(54) **POWDERED ALUMINUM MATERIAL**
PULVERFÖRMIGES ALUMINIUMMATERIAL
MATÉRIAU D'ALUMINIUM EN POUDRE

(43) Date of publication of application: 03.11.2021
(73) Proprietor: Obshchestvo S Ogranichennoj Otvetstvennost'Yu "Institut Legkikh Materialov I Tekhnologij", Moscow 119049 (RU)
(72) Inventor: MANN, Viktor Khrist'yanovich, Moscow, 123181 (RU); KROKHIN, Aleksandr Yur'evich, Moscow, 109548 (RU); VAKHROMOV, Roman Olegovich, Lyubertsy, 140000 (RU); POLYAKOV, Sergej Vital'evich, St.Petersburg, 197101 (RU); RYABOV, Dmitrij Konstantinovich, Moscow, 117208 (RU); KOROLEV, Vladimir Aleksandrovich, Moscow, 127642 (RU); DAUBARAJTE, Dar'ya Konstantinovna, Moscow, 123007 (RU); KRASIL'NIKOVA, Yuliya Olegovna, Elektrostal', 144010 (RU)
(74) Representative: Atalay, Baris
(86) International application number: PCT/RU2018/000796
(87) International publication number: WO 2020/117090

(56) References cited:
- EP-A1- 0 304 284
- WO-A1-2018/189708
- WO-A2-2017/077137
- WO-A2-2017/077137
- CN-A- 105 695 823
- US-A- 5 217 546
- US-A- 5 344 507
- US-B1- 6 183 887

## Description

The proposed invention relates to the field of metallurgy, namely, to aluminium-based alloys used for the production of powders applied in the manufacture of parts using additive technologies, including the method of selective laser melting.

AlSi10Mg aluminium alloy is known, which is used for the manufacture of parts using additive technologies, containing the following elements, % wt: 9-11 silicon, 0.45-0.6 magnesium, 0.05 manganese, 0.05 zinc, <0.55 iron, <0.1 copper (see Process optimization and microstructural analysis for selective laser melting of AlSi10Mg. K. Kempen, L. Thijs, E. Yasa, M. Badrossamay, W. Verheecke, JP. Kruth. Solid Freeform Fabrication Symposium Conference, Vol. 22, Pages 484-495, 2011).

This alloy shows high processability during printing process of parts, but the high eutectic content results in low ductility. In addition, heat treatment results in relatively low strength.

For complex parts operating under various loads, including alternating loads, materials with a higher set of characteristics and high ductility are required, while the structure must have high thermal stability to work in conditions of process and operational heating.

An aluminium-magnesium alloy is known (CN 105838939 published on August 10, 2016), containing the following components, % wt: 3-6 magnesium, 0.1-0.5 chromium, 0.4-0.7 zinc, 0.25-0.4 silicon, 0.1-0.5 manganese, 0.1-0.5 nickel, 0.05-0.2 zirconium, 0.2-0.5 copper, 0.1-0.2 bismuth, 0.1-0.2 titanium, 0.1-0.2 cerium. The disadvantage of this invention is the high content of elements, such as zinc and bismuth, which easily evaporate during the selective laser melting process, thus changing the chemical composition of the finished part. Also, the addition of copper impairs the weldability of the material, which also affects the quality of the finished parts.

An aluminium alloy is known (CN 105695823 published on June 22, 2016), having improved mechanical properties, containing the following components, % wt: 4.5-5.0 magnesium, 0.5-1.0 manganese, 0.2-0.6 zirconium, 0.12-0.25 chromium, 0.28-0.30 vanadium, 0.1-0.15 titanium, 0.006-0.2 silicon, 0.008-0.2 iron, 0.01-0.05 copper, 0.005-0.25 zinc, 0.05-0.15 boron. The disadvantage of this invention is an insufficient concentration of chromium (0.12-0.25% wt), which leads to insufficient hardening from the addition of chromium.

A rapidly solidified aluminium powder alloy containing an increased chromium content is known (US 5049211 published on September 17, 1991). The alloy contains chromium of 1 to 7% wt, as well as at least one element from the group of Hf, W, Mo, Nb, Ta of up to 6% wt. The alloy is characterized by high strength and good thermal stability. However, due to a high content of transition metals, the ductility is low, which also results in low impact strength.

An aluminium alloy is known (US 20170298477 published on October 19, 2017), containing the following components, % wt: 1.0-8.0 magnesium, 0.2-3 scandium, 0.1-1.5 zirconium, 0.5-5 calcium. The disadvantage of this invention is the high cost of the alloy due to the presence of scandium in its composition, as well as the presence of a large amount of calcium, which can evaporate during selective laser melting process.

The closest prior art of the proposed invention is an aluminium-based alloy (EP 0304284 published on August 17, 1988) containing the following elements (% wt):
0.4-1.2 chromium,
0.3-0.8 zirconium,
1.5-2.5 manganese,
0-2.0 magnesium,
balance is aluminium.

The alloy has good strength and thermal stability, which enables to use it for the manufacturing of parts. A high content of manganese leads to good casting properties. However, due to high concentration of transition metals, the plasticity of the material is quite modest. A reduced magnesium content does not result in significant hardening.

The technical objective of the invention is an increase in the strength characteristics of aluminium alloy for the manufacturing of parts using powder and additive technologies while maintaining a high level of elongation, high thermal stability and the absence of defects in the form of hot cracks.

The set technical objective is accomplished by the proposed aluminium material (alloy) in the form of a powder containing elements in the following composition (% wt):

| | |
|---|---|
| magnesium | 4,5-6,5 |
| chromium | 0.35-0.80 |
| zirconium | 0.40-1.0 |
| boron | 0.002-0.15 |
| and at least one element from the group comprising: iron, nickel, manganese | 0.05-0.8 in total |
| aluminium and unavoidable impurities | balance. |

A product, made of the specified powdered aluminium material by using selective laser melting SLM technologies, is also proposed.

Powder production is can be carried out using the following technology, which provides additional benefits:
- preparation of the aluminium melt of the required composition;
- refining of the aluminium melt and overheating it at least by 100°C above the liquidus temperature;
- gas atomization of the aluminium melt while nitrogen, argon or a mixture of them with oxygen can be used as a carrier gas;
- classification of powder for obtaining the required fraction.

Magnesium additive provides both solid-solution hardening and the formation of the required solidification range for the formation of a dense structure when exposed to a laser beam radiation.

It is known that alloys of the Al-Mg system with a magnesium content of 3-4% wt are characterised by a rather high tendency to hot cracking. Considering the results of manufacturing 3D parts by selective laser melting (SLM) to increase the resistance to the formation of hot cracks and increase the alloy strength, it is proposed to dope the alloy with magnesium in an amount of 4.5-6.5% by weight.

Zirconium is introduced to form the dispersed precipitates of Al₃Zr during the supersaturated solid solution decomposition. Zirconium has a low diffusion coefficient in the aluminium matrix, which results in the formation of nano-sized phases during high-temperature ageing. Since the Zr-containing phase is coherent with the aluminium matrix, a strong hardening effect is achieved. The zirconium content is proposed in such a way as to ensure the production of a supersaturated solid solution and to avoid the appearance of large intermetallics in the powder, considering the high crystallisation rates. Chromium also forms a supersaturated solid solution in the aluminium matrix and does not form a joint intermetallic compound with zirconium, which enables to form a larger number of phases during the ageing process and increase strength. In alloys containing magnesium, the Al₁₈Cr₂Mg₃ phase can be formed instead of the Al₇Cr phase, which allows for the formation of a larger volume of intermetallic phases that increase strength. Also, chromium and zirconium at certain ratios increase each other's solubility in aluminium. At the same time, the greatest positive effect is achieved with a Cr/Zr ratio in a range of 0.5 to 1.5.

The addition of boron to the alloy provides a modification effect in the manufacture of parts due to the formation of nanoscale boride particles. A more dispersed structure has a more favourable effect on the performance of the finished part.

At least one element from the group of iron, manganese, nickel is introduced for additional hardening due to both the formation of a solid solution and the formation of intermetallic phases with aluminium, and at high concentrations, an increase in the castability of alloys is achieved, which is associated with the formation of eutectic when these elements are introduced in accordance with equilibrium phase diagrams.

The drawings show:

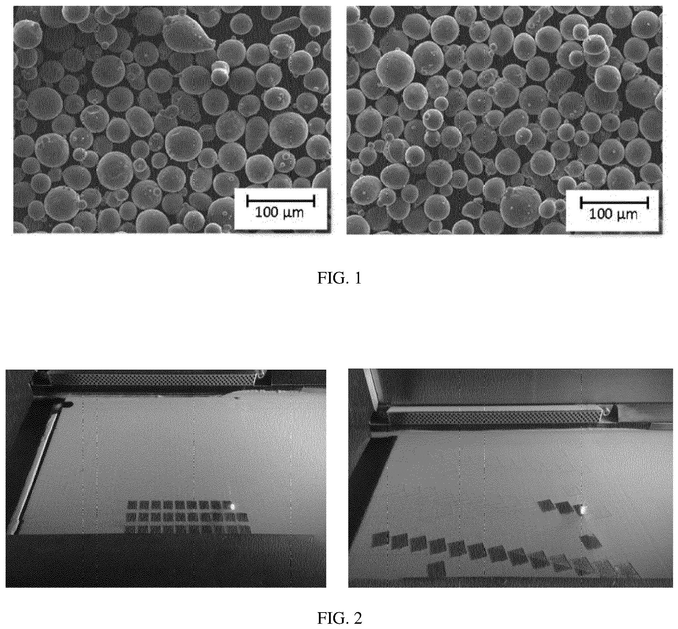

Fig. 1. AlMgCrZr alloy powder particles.
Fig. 2. Selective laser melting process and some samples obtained.
Fig. 3. Images of the structures of the samples of 1, 2, 3, A, B compositions.

The proposed invention is described by the following example.

The alloy was prepared in the following sequence:
Aluminium was melted and heated to a temperature of 830-850°C. Then zirconium was added with a melted Al-10% Zr alloying additive. Chromium and iron were added with Cr80F20 (80% Cr 20% flux) and Fe80F20 (80% Fe, 20% flux) tablets; manganese and nickel, in the form of pure metals.

The melt was heated to 810-830°C, kept for 1 hour at a temperature of 790-820°C, and stirred every 15-20 minutes.

After removing the slag, carnallite flux was added on the surface of the melt at the rate of 2 kg/t, and after its melting, magnesium was added.

The melt was held for 30 minutes, while being stirred every 15 minutes.

Boron was introduced into the melt in the form of a Al-5%B master alloy, then the melt was held for 15 minutes and after that stirred.

Slag was removed from the surface of the melt and samples were taken to the chemical composition control.

Based on the results of the quick analysis, the chemical composition was adjusted to the calculated one.

Then the melt was atomized through a nozzle to produce spherical powders. The obtained powders were classified to obtain a fraction of 20-63 µm.

Nitrogen-oxygen gas mixture was used as a carriage gas in atomization process.

As a result, powders of the following chemical composition were obtained, as shown in Table 1.

**Table 1**

| 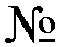 | Al | Mg | Cr | Zr | Mn | Fe | Ni | B | Cr/Zr |
|---|---|---|---|---|---|---|---|---|---|
| 1 | base | 4.5 | 0.8 | 0.8 | 0.1 | 0.1 | - | 0.12 | 1.0 |
| 2 | | 5.2 | 0.5 | 1.0 | - | 0.01 | 0.04 | 0.05 | 0.5 |
| 3 | | 6.5 | 0.60 | 0.4 | 0.7 | 0.1 | - | 0.002 | 1.5 |
| 4 | | 6.0 | 0.35 | 0.55 | 0.2 | 0.2 | | 0.02 | 0.63 |
| 5-0 | | 6.0 | 0.8 | 0.4 | 0.2 | 0.2 | | 0.01 | 2.0 |
| 6-0 | | 5.9 | 0.4 | 1.1 | 0.2 | 0.3 | | 0.02 | 0.36 |
| A | | 2.0 | 1.2 | 1.5 | - | - | - | - | |
| B | | 3.0 | 0.2 | 0.3 | - | - | - | - | |

The resulting powders were used to obtain samples using selective laser melting technology. The EOS M290 printer was used to make samples. Printing was carried out at a laser power of 250 W with various hatch distance and scanning speeds in the range of 200-1000 mm/s.

The quality of the obtained samples was determined by the microstructure. Microspecimens were prepared according to the standard technology, the study was carried out on an unetched surface using a METAM RV-21 inverted metallographical microscope.

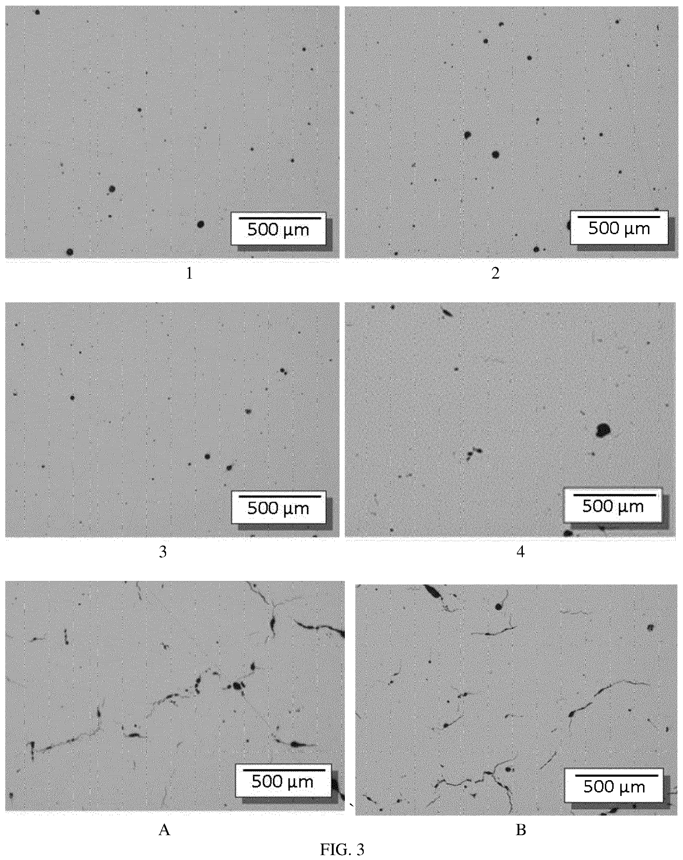

Images of the structure are shown in Fig. 3. As can be seen, alloys A and B did not allow to obtain a defect-free structure, which is associated with reduced castability and a large solidification range of the alloy. Also, in alloy B with a high content of zirconium and chromium, excessive intermetallics were found.

Also, samples were made to determine the hardness and tensile properties. The hardness was determined using an EMCO-TEST hardness tester, and the tensile tests were carried out in accordance with GOST-1497.

The samples were examined after annealing at a temperature of 400°C for 5 hours.

AlSilOMg alloy, which was annealed at a temperature of 300°C for 2 hours, was put into a perspective. The test results are presented in Table 2.

**Table 2**

| Alloy | Tensile strength, MPa | Yield strength, MPa | Elongation, % | Hardness, HV | |
|---|---|---|---|---|---|
| | | | | After annealing | After soaking for 50 hours at 200°C |
| 1 | 420 | 310 | 14.0 | 119 | 116 |
| 2 | 440 | 340 | 12.0 | 128 | 122 |
| 3 | 420 | 330 | 13.5 | 122 | 116 |
| 4 | 425 | 320 | 14.0 | 123 | 119 |
| 5-0 | 410 | 290 | 10.5 | 117 | 114 |
| 6-0 | 415 | 300 | 9.0 | 119 | 113 |
| AlSi10Mg | 340 | 210 | 7.0 | 80 | 68 |

The resulting material has a 25% increased tensile strength with a 70% improved elongation.

Besides, due to the formation of dispersoids with a slow diffusion rate in aluminium, it is possible to maintain high hardness values during prolonged annealing at a temperature of 200°C. Alloys 5-0 and 6-0, having a strong difference between the chromium and zirconium content, show slightly reduced elongation due to the formation of larger intermetallics. This fact is caused by the reduced solubility of the elements in the aluminium matrix when the ratio deviates from the optimal one.

The technical result is an increase in the strength of aluminium alloy for the manufacture of parts using powder and selective laser melting technologies while maintaining a high level of elongation, high thermal stability and the absence of defects.

## Claims

1. A powdered aluminium material containing magnesium, chromium, and zirconium **characterised in that** it additionally contains boron and at least one element from the group of manganese, iron, and nickel, with the following ratio of components, % wt.
| | |
|---|---|
| magnesium | 4,5-6,5 |
| chromium | 0.35-0.80 |
| zirconium | 0.40-1.0 |
| boron | 0.002-0.12 |
| manganese, iron, nickel | 0.05-0.8 in total |
| aluminium and unavoidable impurities remainder. | |

2. Powdered aluminium material according to claim 1, wherein the ratio of chromium to zirconium is set in the range from 0.5 to 1.5, providing the best joint solubility.

3. Powdered aluminium material according to claim 1, obtained using the following technology:
- preparation of the aluminium melt of the required composition;
- refining of the aluminium melt and overheating at least 100 °C above the liquidus temperature;
- gas atomization of the aluminium melt using a nozzle, while nitrogen, argon or their mixture with oxygen can be used;
- classification of powder for obtaining the required fraction.

4. A part made using selective laser melting, SLM, technologies, produced of powdered aluminium material according to any one of claims 1-3.

## Patentansprüche

1. Pulverförmiges Aluminiummaterial, das Magnesium, Chrom und Zirkonium enthält, **dadurch gekennzeichnet, dass** es zusätzlich Bor und mindestens ein Element aus der Gruppe Mangan, Eisen und Nickel enthält, mit folgendem Verhältnis der Komponenten, in Gew.-%:
| | |
|---|---|
| Magnesium | 4,5-6,5 |
| Chrom | 0.35-0.80 |
| Zirkonium | 0.40-1.0 |
| Bor | 0.002-0.12 |
| Mangan, Eisen, Nickel | 0,05-0,8 insgesamt |
| Aluminium und verbleibende unvermeidbare Verunreinigungen. | |

2. Pulverförmiges Aluminiummaterial nach Anspruch 1, wobei das Verhältnis von Chrom zu Zirkonium im Bereich von 0,5 bis 1,5 liegt, was die beste Löslichkeit der Verbindung ergibt.

3. Pulverförmiges Aluminiummaterial nach Anspruch 1, hergestellt nach dem folgenden Verfahren:
- Herstellung der Aluminiumschmelze in der gewünschten Zusammensetzung;
- Raffination der Aluminiumschmelze und Überhitzung um mindestens 100 °C über die Liquidustemperatur;
- Gaszerstäubung der Aluminiumschmelze mit Hilfe einer Düse, wobei Stickstoff, Argon oder deren Gemisch mit Sauerstoff verwendet werden können;
- Klassifizierung des Pulvers, um die gewünschte Fraktion zu erhalten.

4. Durch selektives Laserschmelzen (SLM) hergestelltes Teil, das aus pulverförmigem Aluminiummaterial nach einem der Ansprüche 1 bis 3 hergestellt ist.

## Revendications

1. Matériau d'aluminium en poudre contenant du magnésium, du chrome et du zirconium, **caractérisé par le fait qu'**il contient en outre du bore et au moins un élément du groupe du manganèse, du fer et du nickel, avec le rapport suivant des composants, % en poids.
| | |
|---|---|
| magnésium | 4,5-6,5 |
| chrome | 0,35-0,80 |
| zirconium | 0,40-1,0 |
| bore | 0,002-0,12 |
| manganèse, fer, nickel | 0,05-0,8 au total |
| aluminium et impuretés inévitables. | |

2. Matériau d'aluminium en poudre selon la revendication 1, dans lequel le rapport entre le chrome et le zirconium est compris entre 0,5 et 1,5, ce qui permet d'obtenir la meilleure solubilité des joints.

3. Matériau d'aluminium en poudre selon la revendication 1, obtenu en utilisant la technologie suivante :
- préparation de la fonte d'aluminium de la composition requise ;
- raffinage de l'aluminium fondu et surchauffe d'au moins 100 °C au-dessus de la température du liquidus ;
- atomisation gazeuse de l'aluminium fondu à l'aide d'une buse, l'azote, l'argon ou leur mélange avec l'oxygène pouvant être utilisés ;
- classification de la poudre pour obtenir la fraction requise.

4. Pièce fabriquée à l'aide des technologies de fusion sélective par laser (SLM), produite à partir de poudre d'aluminium selon l'une des revendications 1 à 3.
